# EUROPÄISCHE PATENTSCHRIFT

(11) **EP 0 751 027 B1**
(45) Veröffentlichungstag und Bekanntmachung des Hinweises auf die Patenterteilung: **19.01.2000**
(21) Anmeldenummer: 96109559.3
(22) Anmeldetag: 14.06.1996
(51) Int. Cl.: B60K 23/02, F16D 33/06

(54) **Anordnung einer hydrodynamischen Kupplung in einem Antriebssystem**
Disposition of a hydrodynamic clutch within a drive system
Agencement d'accouplement hydrodynamique dans un système d'entraînement

(30) Priorität: 26.06.1995 DE 19522753
(43) Veröffentlichungstag der Anmeldung: 02.01.1997
(73) Patentinhaber: Voith Turbo Beteiligungs GmbH, 89522 Heidenheim (DE)
(72) Erfinder: Adleff, Kurt, 74564 Crailsheim (DE); Schüttler, Günther, 74599 Wallhausen (DE)
(74) Vertreter: Dr. Weitzel & Partner

(56) Entgegenhaltungen:
- DE-U- 7 315 939
- GB-A- 2 043 843
- SOVIET INVENTIONS ILLUSTRATED Section PQ, Week 8602 Derwent Publications Ltd., London, GB; Class Q63, AN 86-012585 XP002032756 & SU 1 163 066 A (TSYBULNIK YU A) , 23.Juni 1985

## Beschreibung

Die Erfindung betrifft eine Anordnung einer hydrodynamischen Kupplung in einem Antriebssystem, insbesondere einem Turbocompoundsystem, im einzelnen mit den Merkmalen aus dem Oberbegriff des Anspruchs 1.

Bei Turbocompoundsystemen wird zur Rückgewinnung von Energie aus den Abgasen eines Verbrennungsmotors ein Abgasturbolader vorgesehen, der eine von den Motorabgasen angetriebene Turbine und einen mit dieser mechanisch verbundenen Verdichter aufweist, und der die für den Motor erforderliche Verbrennungsluft vorverdichtet. Die Abgase selbst besitzen nach dem Ausströmen aus der Turbine noch einen hohen Energiegehalt. Um diese Restenergie nutzbar zu machen, besteht die Möglichkeit, der Turbine des Abgasturboladers eine zweite, von den Abgasen angetriebene Turbine nachzuordnen, die so geschaltet wird, daß ein Teil der Restenergie mechanisch auf die Antriebswelle des Verbrennungsmotors oder einen damit verbundenen Antrieb überträgt.

Derartige Systeme sind beispielsweise aus den folgenden Druckschriften bekannt:
1. US-PS 4,586,337
2. WO 86/00665

Diese beiden Schriften zeigen Abgasturbinen, die über eine hydrodynamische Kupplung aus den Abgasen eines Verbrennungsmotors gewonnene Energie auf ein Steuerungsrad des Motors übertragen und für eine Schwingungsentkopplung zwischen Motor und Abgasturbine sorgen.

Bei diesen Turbocompoundsystemen ist es wichtig, die Verluste in der Übertragung zwischen der Abgasturbine und der Kurbelwelle zu minimieren, um zu sichern, daß die Restenergie eine wirklich zusätzliche Antriebskraft auf die Kurbelwelle überträgt. Es ist vorteilhaft, das Schmiermittel des Motors als Betriebsmittel der hydrodynamischen Kupplung zu verwenden. In diesem Fall können Lager der hydrodynamischen Kupplung gleichzeitig geschmiert werden, und die Motorölpumpe kann zum Füllen der hydrodynamischen Kupplung genutzt werden, und gleichzeitig kann mit dem Schmiermittel bei ständiger Durchströmung die erzeugte Hitze abgeführt werden.

Die Hauptlager in einer hydrodynamischen Kupplung tragen auf der einen Seite das Turbinenrad und das Pumpenrad und auf der anderen den stationären Teil der Kupplung. Aufgrund der ständigen Rotation sind die Lager, welche das Turbinenrad gegenüber dem Pumpenrad abstützen, nur dem Schlupf zwischen dem Pumpen- und dem Turbinenrad der hydrodynamischen Kupplung ausgesetzt. Diese Lager, welche das Turbinenrad gegenüber dem Pumpenrad abstützen, können deshalb als Niedriggeschwindigkeitslager bezeichnet werden. Die Lager, welche sowohl das Pumpenrad oder das Turbinenrad im stationären Teil der Kupplung abstützen, werden ständig beansprucht bei Rotation, insbesondere bei höheren Drehzahlen. Diese Lager werden deshalb Hochgeschwindigkeitslager genannt. In den Druckschriften US 3,058,296 und US 3,136,129 sind beide - Niedrig- und Hochgeschwindigkeitslager - geflutet mit einem Öl/Hydraulikfluid, welches in den Arbeitsraum der Kupplung geleitet wird. Zur Wärmeabfuhr sind somit sehr große Ströme erforderlich, da auch die an den Lagern anfallende Wärme abgeführt werden muß.

Aus der EP 0 507 887 B1 ist deshalb eine Anordnung zur effektiven Ölversorgung einer Arbeitskammer in einer mit Öl durchströmten hydrodynamischen Kupplung und zur Schmierung der Lager der Kupplung bekannt, deren Ölversorgung durch einen Kanal in dem stehenden Teil der Kupplung bewirkt wird, der in einen Raum der Kupplung stromaufwärts eines ersten Lagers mündet, durch welches das Pumpenrad im Laufrad der Kupplung gelagert ist, wobei das Öl nach Durchströmen des ersten Lagers die das Pumpenrad und das Laufrad enthaltende Arbeitskammer der Kupplung erreicht. Zur Lagerung im Gehäuse ist in einem der Räder der Kupplung ein zweites Lager angeordnet, welches mit dem Raum stromaufwärts des ersten Lagers über eine Drossel in Verbindung steht, wobei die Drossel gegen den Hauptölstrom zur Kupplung abdichtet und nur eine zur Durchflußschmierung des zweiten Lagers ausreichende Ölmenge durchläßt. Eine derartige Anordnung zeichnet sich durch einen enormen konstruktiven Aufwand aus. Zur Betriebsmittelzufuhr wird das eine Lager vollständig geflutet, während für das andere Lager über eine Drossel ein Teilstrom zur Schmierung abgezweigt wird. Aufgrund dieser Anordnung und einer komplizierten Betriebsmittelzufuhrkanalführung aufgrund der Betriebsmittelführung von einem ruhenden Bauteil zu einem rotierenden Bauteil sind eine Reihe zusätzlicher Dichtmaßnahmen erforderlich.

Der Erfindung liegt deshalb die Aufgabe zugrunde, eine hydrodynamische Kupplung für den Einsatz in einem Antriebssystem, insbesondere Turbocompoundsystem, derart weiterzuentwickeln, daß eine einfache Betriebsmittelzufuhr erfolgt und für die Schmiermittelzufuhr der Lager keine separate Versorgungsleitung erforderlich ist. Die aufgrund der Drehmomentenübertragung in der Kupplung anfallende Wärme soll ohne größeren Aufwand wieder abgeführt werden können.

Die erfindungsgemäße Lösung ist durch die kennzeichnenden Merkmale des Anspruches 1 charakterisiert. Vorteilhafte Ausgestaltungen sind in den Unteransprüchen wiedergegeben.

Erfindungsgemäß erfolgt die Abstützung des Primär-, d.h. des Pumpenrades der hydrodynamischen Kupplung auf der Abtriebswelle der Kupplung, mit welcher das Sekundär- bzw. das Turbinenrad drehfest verbindbar ist. Die Abstützung erfolgt dabei vorzugsweise über eine Lageranordnung, umfassend wenigstens ein Lager, vorzugsweise zwei Lager, wobei vorzugsweise aufgrund der guten Aufnahmefähigkeit für kombinierte Belastungen Schrägkugellager verwendet werden. Die Schrägkugellager werden dabei paarweise nebeneinander angeordnet. Die Anordnung dieser Lagerung erfolgt dabei in radialer Richtung unterhalb des vom Pumpenrad beschriebenen Arbeitsraumteiles. In axialer Richtung in Einbaulage betrachtet erfolgt die Anordnung der Lagerung vorzugsweise im Bereich der Trennebene, welche von der Beschaufelung von Pumpenrad und Turbinenrad gebildet wird. Zur Betriebsmittelversorgung ist eine sich durch die Abtriebswelle erstreckende Zentralbohrung vorgesehen, von welcher sich in radialer Richtung in Umfangsrichtung der Abtriebswelle Verteilkanäle erstrecken. Diese sind vorzugsweise in Einbaulage der Kupplung derart angeordnet, daß diese ebenfalls im Bereich der Trennebene zwischen Turbinen- und Pumpenrad liegen. Die Verteilkanäle münden in einen von Pumpen- und Turbinenrad in Einbaulage beschriebenen und dem torusförmigen Arbeitsraum vorgelagerten Zufuhrraum. Dieser wird, wie bereits erwähnt, in axialer Richtung vom Turbinenrad sowie auf seiten des Pumpenrades im wesentlichen von der Lageranordnung begrenzt. Zur Realisierung einer Teilstromabzweigung für die Lageranordnung sind entsprechende Mittel im Betriebsmittelzufuhrraum vorgesehen. Diese können beispielsweise in Form einer Scheibe mit im Querschnitt abgeschrägter Innenkontur ausgeführt sein. Der dadurch entstehende Durchlaß dient der Dosierung des Schmiermittelflusses durch die Lager.

Die erfindungsgemäße Lösung zeichnet sich durch einen einfachen Aufbau aus, insbesondere einer einfachen Betriebsmittelzufuhr mit einfacher Kanalführung, wobei im Betriebsmittelzufuhrsystem gleichzeitig eine Abzweigmöglichkeit für die Schmiermittelzufuhr der Lager vorgesehen ist. Aufwendige Dichtungsmaßnahmen können entfallen. Die Betriebsmittelzufuhr erfolgt hier im Betrieb über rotierende Maschinenteile. Zusätzliche Dichtmaßnahmen sind nicht erforderlich. Die erfindungsgemäße Lösung ist fertigungstechnisch sehr einfach realisierbar und damit kostengünstig. Des weiteren zeichnet sie sich durch eine einfache Montage und damit auch spätere Austauschbarkeit aus.

Vorteilhafterweise besteht auch die Möglichkeit, bei Abzweigung des Teilstromes für die Lageranordnung zur Abstützung des Pumpenrades diesen Teilstrom auch zur Schmierung benachbarter in axialer Richtung im Bereich der Lageranordnung angeordneter Lager zu nutzen. Dazu können einfache Verbindungsleitungen bzw. Bohrungen oder Öffnungen genutzt werden.

Bei Erwärmung des Betriebsmittels kann dieses über Öffnungen am Turbinenrad abgeführt und durch neues Betriebsmittel, welches über die zentrale Zufuhrleitung durch die Abtriebswelle dem Arbeitsraum wieder zugeführt wird, ersetzt werden.

Bei entsprechender Lageranordnung und Anordnung der Mittel zur Dosierung des Teilstromes kann dieser prozentual gegenüber dem im Arbeitsraum vorhandenen Betriebsmittel so gering wie nötig gehalten werden.

Die erfindungsgemäße Lösung wird nachfolgend anhand von Figuren erläutert. Darin ist im übrigen folgendes dargestellt:
Figur 1 zeigt eine erfindungsgemäße Ausführung einer Anordnung einer hydrodynamischen Kupplung in einem Turbocompoundsystem mit einer eine Abschälkante bildenden Scheibe im Betriebsmittelzufuhrraum;
Figur 2 verdeutlicht eine weitere erfindungsgemäße Ausführung für die Anordnung einer hydrodynamischen Kupplung.

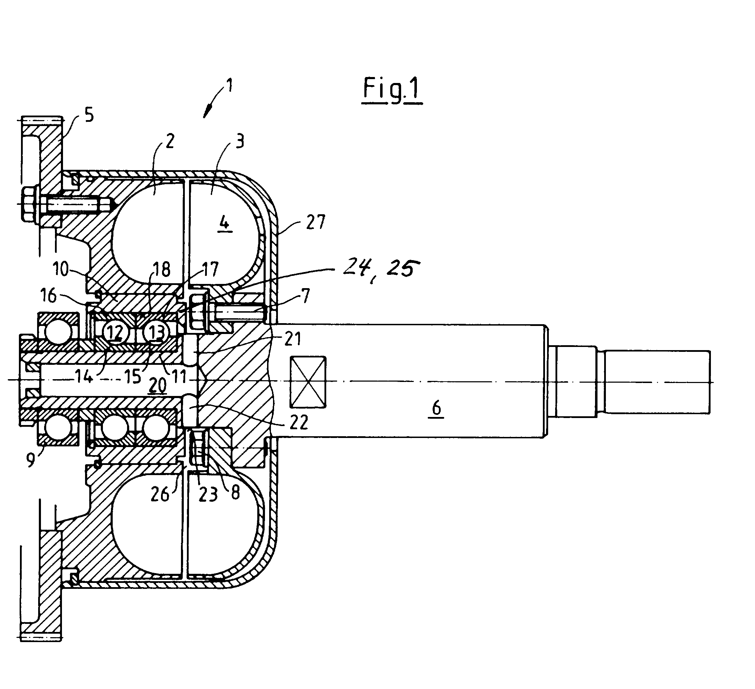

Die Figur 1 verdeutlicht eine zur Kraftübertragung gehörende hydrodynamische Kupplung 1 im Detail. Die hydrodynamische Kupplung 1 umfaßt ein Primärrad, welches als Pumpenrad 2 bezeichnet wird, und ein als Turbinenrad wirksam werdendes Sekundärrad, das mit der Bezugsziffer 3 bezeichnet ist. Pumpen- und Turbinenrad bilden miteinander einen torusförmigen Arbeitsraum 4, welcher mit Betriebsfluid, beispielsweise mit Öl befüllbar ist. Das Pumpenrad wird von einem auf einer hier nicht dargestellten Welle einer hier nicht dargestellten Antriebsturbine angeordnet Zahnrad angetrieben. Zu diesem Zweck kämmt dieses Zahnrad mit einem drehfest mit dem Pumpenrad 2 gekoppelten Zahnrad 5.

Das Sekundärrad bzw. Turbinenrad 3 ist auf einer Abtriebswelle 6 der hydrodynamischen Kupplung 1 angeordnet. Im dargestellten Ausführungsbeispiel ist das Turbinenrad 3 mit der Abtriebswelle 6 drehfest mittels Kraft bzw. formschlüssiger Verbindungen in Form von Schraubenverbindungen, hier stellvertretend die Schraubverbindungen 7 und 8, gekoppelt. Die über die hydrodynamische Kupplung 1 auf die Abtriebswelle 6 übertragene Leistung wird an eine Kraftübertragungseinheit übertragen, wobei die über die Abtriebswelle 6 auf die Kraftübertragungseinheit übertragene Leistung mit der Leistung an der Abtriebswelle einer hier nicht dargestellten Antriebsmaschine im Bereich der Kraftübertragungseinheit addiert wird. Des weiteren sind auf der Abtriebswelle 6 das Zahnrad 5 über ein Lager 9, welches beispielsweise als Kugellager ausgeführt ist, sowie das Pumpenrad 2 über eine Anordnung aus einer Hülse 10 und einer Lageranordnung 11 gelagert. Die Lageranordnung 11 umfaßt im dargestellten Fall zwei Schrägkugellager 12 bzw. 13. Diese ermöglichen es, kombinierte Belastungen, d.h. Radial- und Axialkräfte besser als Rillenkugellager aufzunehmen. Das Pumpenrad 2 stützt sich über die Hülse 10 und die beiden Schrägkugellager 12 und 13 an der Abtriebswelle 6 ab. Zu diesem Zweck sind die Innenringe 14 bzw. 15 der Schrägkugellager 12 bzw. 13 der Lageranordnung 11 direkt auf der Abtriebswelle 6 angeordnet. Die Außenringe 16 bzw. 17 der Schrägkugellager 12 bzw. 13 der Lageranordnung 11 stützen sich an der Innenseite 18 der Hülse 10 ab. Das Primärrad 2 steht mit der Außenseite 19 der Hülse 10 in Kontakt. Zur Realisierung der Drehmomentenaufnahme am Pumpenrad und Weitergabe über das Betriebsmittel an das Turbinenrad 3 erfolgen die Rotation von Pumpenrad 2, Hülse 10 und den Außenringen 16 und 17 der Schrägkugellager 12 und 13 mit gleicher Drehzahl. Zwischen den Außenringen 16 und 17 und der Hülse 10 sowie der Außenseite 19 der Hülse 10 und dem Pumpenrad 2 sind zu diesem Zweck Preßsitze vorgesehen. Analoges gilt für die Abstützung des Zahnrades 5 über das Lager 9 auf der Abtriebswelle 6.

Die Ölversorgung des Arbeitsraumes erfolgt dabei direkt über die Abtriebswelle 6. Zu diesem Zweck weist die Abtriebswelle 6 eine Bohrung 20 auf, die vorzugsweise koaxial zur Symmetrieachse A der Abtriebswelle 6 angeordnet ist. Diese Bohrung erstreckt sich von der Primärseite bis in etwa zur durch die Mittelsenkrechte durch den torusförmigen Arbeitsraum gelegten Ebene. Von dieser Zentralbohrung 20 gehen Verteilbohrungen 21 und 22 ab, welche sich von der Zentralbohrung 20 bis an den Außenumfang 23 der Abtriebswelle 6 in radialer Richtung erstrecken. Über die Zentralbohrung 20 und die Verteilbohrungen 21 und 22 wird das Betriebsfluid in den torusförmigen Arbeitsraum 4 geleitet. Gleichzeitig erfolgt eine Abzweigung des Ölstromes für die Lageranordnung 11. Zu diesem Zweck ist zwischen dem Pumpenrad 2 und dem Turbinenrad 3 eine Scheibe 24 angeordnet, welche eine abgeschrägte Innenkontur 25 aufweist, die als Abschälkante für Betriebsmittel fungiert. Die abgeschrägte Innenkontur verläuft dabei vom Zufuhrraum 26 zu den Außenringen 16 und 17 der Schrägkugellager 12 bzw. 13 der Lageranordung 11 hin. Die beiden Schrägkugellager 12 bzw. 13 werden dabei vollständig geflutet. Entsprechend der Auslegung der Scheibe 24 kann auf die Größe des abgezweigten Betriebsmittelstromes Einfluß genommen werden. Es ist somit nur eine zentrale Betriebsmittelzufuhr und damit auch Schmiermittelzufuhr erforderlich. Bei entsprechender Ausgestaltung besteht auch die Möglichkeit, das Lager 9, welches der Abstützung des Zahnrades 5 an der Abtriebswelle 6 dient, mit Schmiermittel zu versorgen.

Die hydrodynamische Kupplung 1 wird von einem glockenförmigen Gehäuse 27 umschlossen. Dieses ist vorzugsweise als Tiefziehteil ausgeführt und mittels verschiedener Verbindungsmöglichkeiten am Zahnrad 5 befestigt. Dadurch besteht die Möglichkeit, das glockenförmige Gehäuse 27 als ein Tiefziehteil herzustellen und beispielsweise mittels Schweiß- oder aber Heftverbindungen am Zahnrad 5 zu befestigen.

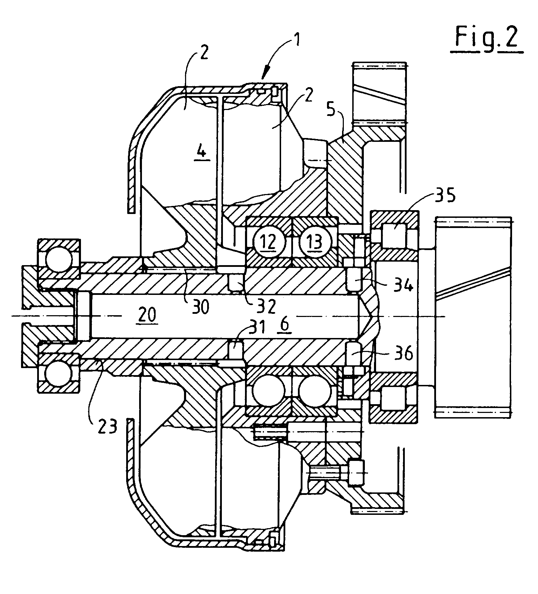

In der Figur 2 ist eine ähnliche Ausführung wie in der Figur 1 dargestellt, weshalb für gleiche Elemente die gleichen Bezugszeichen verwendet wurden. Das Pumpenrad der hydrodynamischen Kupplung 1 stützt sich auch hier über eine Lageranordnung 11, umfassend zwei paarweise angeordnete Schrägkugellager 12 bzw. 13, auf der Abtriebswelle 6 der hydrodynamischen Kupplung ab. Das Pumpenrad 2 ist des weiteren drehfest mit einem Zahnrad 5 verbunden, hier über die Schraubverbindungen 7 bzw. 8. Das Zahnrad 5 stützt sich dabei zum Teil am Schrägkugellager 13 ab.

Das Turbinenrad 3 ist über eine Keilwellenverbindung 30 mit der Abtriebswelle 6 drehfest gekoppelt. Die Versorgung des Arbeitsraumes 4 mit Betriebsfluid erfolgt über eine Zentralbohrung 20, welche sich von der Sekundärseite, d.h. von seiten des Turbinenrades 3, in Richtung Primärseite, d.h. in Richtung des Pumpenrades 2, der hydrodynamischen Kupplung 1 durch die Abtriebswelle 6 erstreckt. Von dieser zentralen Bohrung 20 erstrecken sich Verteilkanäle 31 und 32 in radialer Richtung zum Außenumfang 23 der Abtriebswelle 6. Die Verteilkanäle 31 und 32 sind dabei derart angeordnet, daß diese in axialer Richtung radial unterhalb des Pumpenrades 2, insbesondere des Betriebsmittelzufuhrraumes 26, angeordnet sind. Das Betriebsfluid gelangt vom Betriebsmittelzufuhrraum 26 direkt an die Lager 12 und 13 der Lageranordnung 11. Auch in diesem Fall wird ein Betriebsmittelstrom zur Schmierung der Lager vom Betriebsmittelraum 26, welcher in den Arbeitsraum 4 mündet, abgezweigt.

In der dargestellten Ausführung sind weitere Verteilkanäle 33 und 34 vorgesehen, die ein weiteres Lager 35 von der Zentralbohrung 20 aus mit Schmiermittel versorgen können. In einer anderen hier nicht dargestellten Variante besteht die Möglichkeit, dieses Lager 35 ebenfalls vom abgezweigten Betriebsmittelstrom aus dem Zufuhrraum 26 zu versorgen. Zu diesem Zweck ist eine Verbindung zwischen dem Lager 13 der Lageranordnung 11 und dem Lager 35 erforderlich. Die drei Lager könnten in diesem Fall von einem abgezweigten Betriebsmittelstrom aus versorgt werden.

Das glockenförmige Kupplungsgehäuse 27 ist hier derart angeordnet und ausgeführt, daß es direkt mit dem Primärrad verbunden ist. Auch hier ist das glockenförmige Kupplungsgehäuse 27 als Tiefziehteil ausgeführt.

Das Turbinenrad 3 ist derart aufgebaut und ausgeführt, daß es in Einbaulage in den Betriebsmittelzufuhrraum 26 hineinragende Rippen aufweist. Diese sind derart angeordnet, daß sie sich in bestimmten Abständen auf einem gemeinsamen Durchmesser im Schmiermittelzufuhrraum angeordnet sind.

Die Anordnung des Betriebsmittelzufuhrraumes 26 ermöglicht es auch, die Keilwellenverbindung zwischen Turbinenrad 3 und Abtriebswelle 6 zu schmieren.

## Patentansprüche

1. Anordnung einer hydrodynamischen Kupplung in einem Antriebssystem, insbesondere einem Turbocompoundsystem;
1.1 die hydrodynamische Kupplung umfaßt ein Pumpenrad (2) und ein Turbinenrad (3), welche miteinander einen torusförmigen Arbeitsraum (4) bilden;
1.2 das Turbinenrad ist mit einer Abtriebswelle (6) drehfest verbunden;
1.3 dem torusförmigen Arbeitsraum ist ein Betriebsmittelzufuhrsystem zugeordnet; gekennzeichnet durch die folgenden Merkmale:
1.4 das Pumpenrad stützt sich über eine Lageranordnung (11) auf der Abtriebswelle ab;
1.5 das Betriebsmittelzufuhrsystem umfaßt:
1.5.1 einen Betriebsmittelzufuhrraum (26), welcher radial unterhalb des torusförmigen Arbeitsraumes angeordnet ist und in axialer Richtung von der Lageranordnung und der Kontur des Turbinenrades begrenzt wird;
1.5.2 einen zentralen Betriebsmittelzufuhrkanal (20), welcher in der Abtriebswelle angeordnet ist und sich in der Abtriebswelle in axialer Richtung wenigstens bis in den Bereich der Mittelebene der Kupplung erstreckt;
1.5.3 wenigstens einen Verteilkanal (21,22 ; 31,32), welcher den zentralen Betriebsmittelzufuhrkanal mit dem Betriebsmittelzufuhrraum verbindet,
1.6 im Betriebsmittelzufuhrraum sind Mittel (24) vorgesehen, die eine dosierte Abzweigung eines Teilstromes zur Schmierung der Lageranordnung ermöglichen.

2. Anordnung nach Anspruch 1, dadurch gekennzeichnet, daß das Mittel eine zur Lagerabstützung in axialer Richtung im Betriebsmittelzufuhrraum an den Außenring (17) der Lageranordnung angrenzende Scheibe (24) ist, welche eine in Richtung der Lager sich erweiternde Öffnung freigibt.

3. Anordnung nach einem der Ansprüche 1 bis 2, dadurch gekennzeichnet, daß die Lageranordnung zwei nebeneinander angeordnete Wälzlager (12, 13) umfaßt.

4. Anordnung nach Anspruch 3, dadurch gekennzeichnet, daß die beiden Wälzlager (12, 13) als Schrägkugellager ausgeführt sind.

5. Anordnung nach einem der Ansprüche 1 bis 4, dadurch gekennzeichnet, daß ein weiteres Lager (35) zur Abstützung der Abtriebswelle an einem Maschinenteil vorgesehen ist, welches mit dem zentralen Betriebsmittelzufuhrkanal (20) über wenigstens einen Kanal (33, 34) zur Schmiermittelführung verbunden ist.

## Claims

1. Arrangement of a hydrodynamic clutch in a drive system, in particular a turbocompound system;
1.1 the hydrodynamic clutch comprises a pump wheel (2) and a turbine wheel (3) which together form a toroidal working chamber (4);
1.2 the turbine wheel is non-rotatably connected to a driven shaft (6);
1.3 an operating medium supply system is associated with the toroidal working chamber;
characterised by the following features:
1.4 the pump wheel is supported on the driven shaft via a bearing arrangement (11);
1.5 the operating medium supply system comprises:
1.5.1 an operating medium supply chamber (26) which is arranged radially below the toroidal working chamber and is limited axially from the bearing arrangement and the contour of the turbine wheel;
1.5.2 a central operating medium supply channel (20) which is arranged in the driven shaft and extends axially in the driven shaft at least into the region of the centre plane of the clutch;
1.5.3 at least one distributing channel (21, 22; 31, 32) which connects the central operating medium supply channel to the operating medium supply chamber;
1.6 means (24) are provided in the operating medium supply chamber to allow metered branching of a partial flow for lubrication of the bearing arrangement.

2. Arrangement according to claim 1, characterised in that the medium is a disc (24) which adjoins the outer ring (17) of the bearing arrangement for supporting the bearing in an axial direction in the operating medium supply chamber and clears an orifice extending in the direction of the bearing.

3. Arrangement according to one of claims 1 to 2, characterised in that the bearing arrangement comprises two rolling bearings (12, 13) arranged side by side.

4. Arrangement according to claim 3, characterised in that the two rolling bearings (12, 13) are designed as annular-contact ball bearings.

5. Arrangement according to one of claims 1 to 4, characterised in that a further bearing (35) is provided for supporting the driven shaft on a machine part which is connected to the central operating medium supply channel (20) via at least one channel (33, 34) for lubricant guidance.

## Revendications

1. Dispositif d'accouplement hydrodynamique dans un système d'entraînement, en particulier une turbomachine compound, dans lequel :
1.1 l'accouplement hydrodynamique comprend une roue de pompe (2) et une roue de turbine (3) qui forment à elles deux un espace de travail (4) torique ;
1.2 la roue de turbine est reliée de manière solidaire en rotation à un arbre mené (6) ;
1.3 l'espace de travail torique est disposé dans un circuit d'alimentation en fluide de fonctionnement ;
caractérisé en ce que :
1.4 la roue de pompe s'appuie sur l'arbre mené par l'intermédiaire d'un dispositif de palier (11) ;
1.5 le circuit d'alimentation en fluide de fonctionnement comprend:
1.5.1 une chambre d'arrivée du fluide de fonctionnement (26) qui est disposée en-dessous de l'espace de travail torique dans le sens radial et qui est délimitée dans le sens axial par le dispositif de palier et par le contour de la roue de turbine,
1.5.2 un canal central d'alimentation en fluide de fonctionnement (20) disposé dans l'arbre mené et qui s'étend dans l'arbre mené dans le sens axial, au moins jusqu'au niveau du plan médian de l'accouplement,
1.5.3 au moins un canal de distribution (21, 22 ; 31, 32) reliant le canal central d'alimentation en fluide de fonctionnement et la chambre d'arrivée du fluide de fonctionnement ;
1.6 il est prévu dans la chambre d'arrivée du fluide de fonctionnement des moyens (24) permettant une dérivation dosée d'une partie du courant pour la lubrification du dispositif de palier.

2. Dispositif selon la revendication 1, caractérisé en ce que le moyen est un disque (24) contigu de l'anneau extérieur (27) du dispositif de palier pour l'appui du palier dans le sens axial dans la chambre d'arrivée du fluide de fonctionnement, lequel disque dégage une ouverture s'élargissant en direction des paliers.

3. Dispositif selon l'une quelconque des revendications 1 à 2, caractérisé en ce que le dispositif de palier comprend deux roulements à rouleaux (12, 13) disposés l'un à côté de l'autre.

4. Dispositif selon la revendication 3, caractérisé en ce que les deux roulements à rouleaux (12, 13) sont construits comme des roulements à rouleaux obliques.

5. Dispositif selon l'une quelconque des revendications 1 à 4, caractérisé en ce qu'il est prévu un autre palier (35) destiné à soutenir l'arbre mené sur une partie de la machine, lequel est relié au canal central d'alimentation en fluide de fonctionnement (20) par au moins un canal (33, 34) en vue de l'acheminement du lubrifiant.
